# EUROPÄISCHE PATENTSCHRIFT

(11) **EP 0 751 884 B1**
(45) Veröffentlichungstag und Bekanntmachung des Hinweises auf die Patenterteilung: **16.06.1999**
(21) Anmeldenummer: 95913048.5
(22) Anmeldetag: 23.03.1995
(51) Int. Cl.: B60S 1/08

(54) **BEFESTIGUNG UND ANKOPPLUNG EINES OPTO-ELEKTRONISCHEN SENSORS AN EINER SCHEIBE SOWIE AUFBAU DES SENSORS**
FASTENING AND COUPLING OF AN OPTOELECTRONIC SENSOR TO A PANE AND STRUCTURE OF THE SENSOR
FIXATION ET COUPLAGE D'UN CAPTEUR OPTOELECTRONIQUE SUR UNE VITRE ET STRUCTURE DU CAPTEUR

(30) Priorität: 24.03.1994 DE 4410217
(43) Veröffentlichungstag der Anmeldung: 08.01.1997
(73) Patentinhaber: ROBERT BOSCH GMBH, 70442 Stuttgart (DE)
(72) Erfinder: KLAPPENBACH, Christoph, D-77815 Buehl (DE); RIEHL, Guenther, D-77830 Buehlertal (DE); BURKART, Manfred, D-76473 Iffezheim (DE)
(86) Internationale Anmeldenummer: DE9500401
(87) Internationale Veröffentlichungsnummer: WO9525651

(56) Entgegenhaltungen:
- EP-A- 0 412 653
- EP-A- 0 461 424
- WO-A-92/18848
- DE-A- 4 343 474
- DE-C- 4 329 608
- US-A- 4 701 613
- US-A- 4 871 917

## Beschreibung

### Stand der Technik

Die Erfindung geht aus von einem Sensor zum optischen Erfassen von Fremdkörpern, insbesondere von Regentropfen, an einer Scheibe, gemäß der im Oberbegriff des Anspruchs 1 definierten Gattung.

Bei einer aus der DE-A-4 006 420 bekannten Einrichtung ist an der Innenseite einer optisch transparenten Scheibe der Sender und Empfänger enthaltende Sensor auf der Innenseite der Scheibe mit Hilfe einer Zwischenschicht direkt aufgeklebt. Die Zwischenschicht besteht aus einer optisch nicht transparenten Folie, die im Bereich des Senders, des Empfängers und der dazwischenliegenden Meßstrecke Aussparungen aufweist. In die beiden Aussparungen für Sender und Empfänger sind Folienstücke aus optisch transparentem Material eingesetzt. Mit Hilfe dieser aus unterschiedlichen Materialien bestehender Zwischenschicht wird der Sensor direkt auf die Innenseite der Scheibe, insbesondere der Windschutzscheibe eines Kraftfahrzeugs, klebend befestigt.

Die vorstehend beschriebenen Einrichtung erfordert eine besonders gestaltete Folie als Zwischenschicht und muss über die gesamte Länge von Sendereinkopplung, Meßstrecke und Empfängerauskopplung aufgeklebt werden. Es hat sich in der Praxis als besonders schwierig erwiesen, eine solche Schicht relativ ausgedehnter Größe ohne Einschluß von Luftblasen auf der Fläche der Scheibe aufzukleben. Für die Funktionsfähigkeit und das einwandfreie Arbeiten des Sensors ist es jedoch erforderlich, daß die optische Ankopplung von Sender und Empfänger an die Scheibe so unmittelbar erfolgt, daß keine Änderung der Brechungsverhältnisse des Strahlengangs beim Übergang in die Scheibe erfolgt. Beim Aufkleben wird eine solche Änderung jedoch durch Lufteinschlüsse zwischen Scheibe und Sender/Empfänger in nachteiliger Weise hervorgerufen.

Weiterhin ist ein Regensensor mit einem inneren und äußeren Gehäuseteil aus dem Dokument US-A-4,871,917 bekannt, bei dem das innere Gehäuseteil mittels Federkraft, die am äußeren Gehäuseteil angreift, auf eine Scheibe gedrückt wird. Die Federkraft wird von einer Spiralfeder aufgebracht. Das äußere Gehäuseteil ist an einer auf die Scheibe geklebten Montierplatte befestigt. Das innere Gehäuseteil enthält die Sensoranordnungen zum Sensieren der Feuchtigkeit auf der Scheibe.

### Vorteile der Erfindung

Der erfindungsgemäße Sensor mit den kennzeichnenden Merkmalen des Anspruchs 1 hat demgegenüber den Vorteil des sicheren Ausschlusses von Lufteinschlüssen zwischen Scheibe und Sender/Empfänger. Es wird in diesem sehr kritischen Bereich sowie im Bereich der zwischen Sender und Empfänger liegenden Meßstrecke weder zur Befestigung des Sensors an der Scheibe noch zur optischen Ankopplung Klebetechnik benutzt. In vorteilhafter Weise werden Sender und Empfänger mittels durch Federkraft angedrückter Silikonkissen an die Fläche der Scheibe angedrückt und damit angekoppelt. Der Sensor weist in vorteilhafter Weise ein äußeres und ein inneres Gehäuseteil sowie eine Befestigungsvorrichtung auf, die auf die Scheibe aufgeklebt ist. Das innere Gehäuseteil trägt die wesentlichen opto-elektronischen Elemente und wird mittels Federkraft, die zwischen äußerem und innerem Gehäuseteil angreift, auf die Scheibe gedrückt. Das äußere Gehäuseteil weist ein Befestigungsmittel auf, das mit der auf der Scheibe aufgeklebten Befestigungsvorrichtung lösbar in Eingriff gebracht werden kann, um den Sensor an der Scheibe zu befestigen.
Dadurch, daß nur die Befestigungsvorrichtung selbst auf die Scheibe aufgeklebt wird, kann dieser Arbeitsvorgang von der Montage des Sensors selbst völlig getrennt werden. Beispielsweise kann die Befestigungsvorrichtung vom Hersteller der Windschutzscheibe bereits an der genauen Position aufgeklebt werden. Die Montage des Sensors erfolgt dann z.B. erst bei der Kraftfahrzeug-Herstellung.

Erfindungsgemäß sind am äußeren Gehäuseteil Taschen mit Rastfedern vorgesehen, in die jeweils eine Feder ein rastend eingesetzt wird, um die Federkraft zwischen innerem und äußerm Gehäuseteil aufzubringen.

Durch die in den weiteren Ansprüchen aufgeführten Maßnahmen sind vorteilhafte Weiterbildungen und Verbesserungen des im Anspruch 1 angegebenen Sensors möglich.

Bei dem erfindungsgemäßen Sensor besteht die Befestigungsvorrichtung in vorteilhafter Weise aus zwei auf die Scheibe geklebten Haltefüßen. In zweckmäßiger Art enthalten die Haltefüße von der Scheibe beabstandete, vorzugsweise zylinderförmige Haltezapfen.

Gemäß einer vorteilhaften Ausgestaltung besteht das Befestigungsmittel aus vorzugsweise zwei Schiebern mit in schiefer Ebene angeordneten Schlitzen, wobei die Schieber im außeren Gehäuseteil verschiebbar angebracht sind und in die zylinderförmigen Haltezapfen der Haltefüße einschiebbar sind.

Gemäß einer vorteilhaften Weiterbildung des erfindungsgemäßen Sensors sind in das innere Gehäuseteil zwei Silikonkissen einsetzbar, welche die Ankopplung zwischen Sender und Empfänger und der Scheibe bewirken.

In vorteilhafter Ausgestaltung der Erfindung sind in das innere Gehäuseteil verschiedene wesentliche Elemente des Sensors einsetzbar. Dies sind insbesondere Prismenteile zur Führung der Lichtstrahlen, Sender und Empfänger, eine Heizung für die Meßstrecke und eine Elektronikplatine. Vorteilhafterweise sind einige Elemente bereits auf dieser Platine vormontiert.

Eine besondere Verbesserung des erfindungsgemäßen Sensors besteht darin, daß eine zweite Elektonikplatine parallel zur ersten vorgesehen und mit dieser über eine flexible Verbindung verbunden ist. Diese zweite Platine trägt bevorzugt auch den Anschlußstecker des Sensors. Durch die flexible Verbindung ist in vorteilhafter Weise für eine mechanische Entkoplung von Stecker und Sensor gesorgt.

Weiterhin ist am äußeren Gehäuseteil eine umlaufende Dichtung angebracht, die auf der Scheibe aufliegt und das Innere des Sensors gegen die Außenwelt abdichtet.

### Zeichnung

Die Erfindung ist anhand eines in der Zeichnung dargestellten Ausführungsbeispiels in der nachfolgenden Beschreibung näher erläutert. Es zeigen:
- Fig. 1: in perspektivischer Dartellung den erfindungsgemäßen Sensor, wobei die in das innere Gehäuseteil einsetzbaren Elemente auseinandergezogen dargestellt sind, und
- Fig. 2: in perspektivischer Ansicht den erfindungsgemäßen Sensor mit den auf der Scheibe aufklebbaren Haltefüßen als Befestigungsvorrichtung und den in ausgezogenem Zustand dargestellten Schiebern als Befestigungsmittel.

### Beschreibung des Ausführungsbeispiels

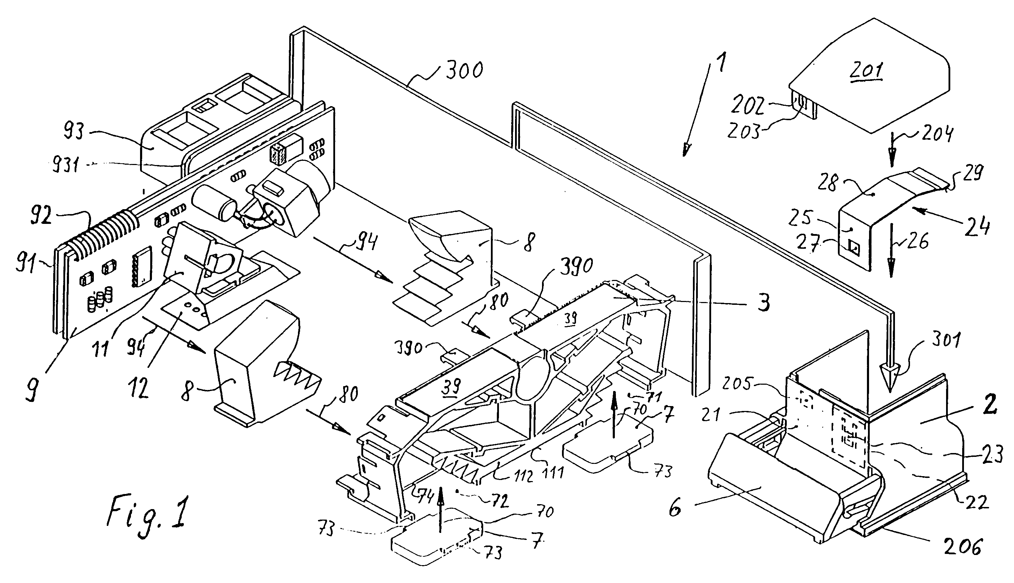

In Fig. 1 ist in perspektivischer Ansicht der erfindungsgemäße Sensor 1 in auseinandergezogener Darstellung gezeigt. Der Sensor 1 weist ein äußeres Gehäuseteil 2 und ein inneres Gehäuseteil 3 sowie eine Befestigungsvorrichtung 4 auf, die aus Haltefüßen 41 mit von der Scheibe 5 beabstandeteten zylinderförmigen Haltezapfen 42 besteht. Die aus den Haltefüßen 41 bestehende Befestigungsvorrichtung 4 wird auf die Scheibe 5 aufgeklebt. Dies kann in zweckmäßiger Weise getrennt von der Montage des Sensors 1 selbst erfolgen.

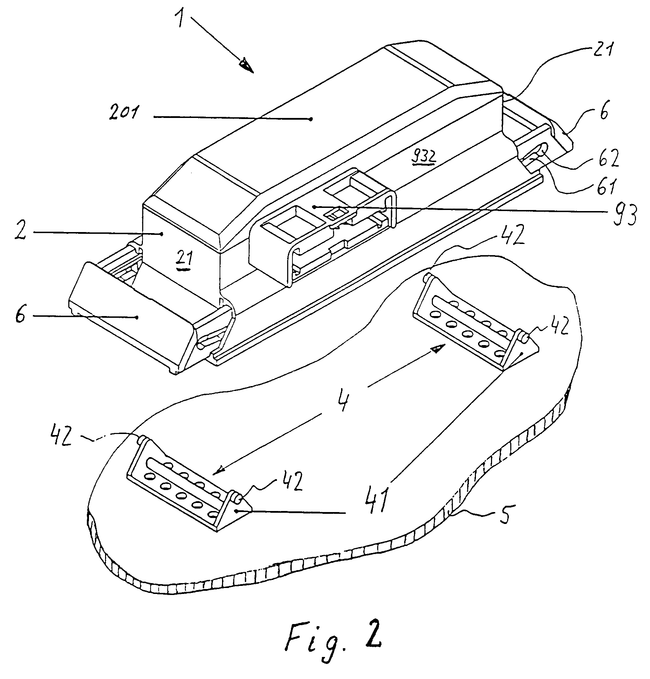

Im äußeren Gehäuseteil 2 ist, wie in Fig. 2 dargestellt, ein aus zwei Schiebern 6 bestehendes Befestigungsmittel in Führungen verschiebbar vorgesehen. In den Schiebern 6 sind in einer zur Ebene der Scheibe 5 schiefen Ebene angeordnete Schlitze 61 auf jeder Seite des Schiebers 6 bzw. des äußeren Gehäuseteils 2 vorgesehen. Zur Befestigung des Sensors 1 wird dieser auf die Haltefüße 41 aufgesetzt und die Schieber 6 werden in das Innere des äußeren Gehäuseteils 2 eingeschoben. Dabei erfassen die Schlitze 61 die Haltezapfen 42 bis diese, auf den schiefen Schlitzen 61 aufgleitend, in runde Rastvertiefungen 62 rastend eingreifen. Damit ist mittels der schiefen Ebene der Schlitze 61 der Sensor 1 festsitzend an die Scheibe 5 gezogen und durch die Verrastung lösbar gehalten.

Wie in Fig. 1 dargestellt, besteht das innere Gehäuseteil 3 aus einer Art Rahmen in den verschiedene Teile einsetzbar sind. Zur besseren Übersicht ist die Vorderwand des inneren Gehauseteils 3 weggelassen, damit die dahinterliegenden verschieden gestalteten Aufnahmeräume sichtbar sind. In der Vorderwand sind zwei Schlitze vorgesehen, die der Aufnahme von vorderen Nasen 73 zweier Silikonkissen 7 dienen. Die hinteren Nasen 73 der silikonkissen 7 liegen auf einer mit 74 bezeichneten Lippe auf. In der Darstellung der Fig. 1 ist nur im Bereich des Empfangsraums 72 diese Lippe 74 sichtbar. Im Bereich des Senderaums 71 wird die entsprechende Lippe durch andere Teile in der Darstellung verdeckt. Die Silikonkissen 7 bilden glasklare Fenster zur Scheibe 5. Sie werden in Richtung der beiden nach oben weisenden Pfeile 70 in das innere Gehäuseteil 3 eingesetzt und dort durch die Nasen 73 gehalten. Bei der weiteren Bestückung des inneren Gehäuseteils 3 werden nun in die Aufnahmeräume oberhalb der beiden Silikonkissen 7 zwei Prismenteile 8 in Richtung der beiden Pfeile 80 von links nach rechts eingeschoben. Diese Prismenteile 8 lenken die Lichtstrahlen im Sensor und enthalten zweckmäßigerweise auch Linsen.

Entsprechend dem vorteilhaften Ausführungsbeispiel der Erfindung sind auf einer Elektronikplatine 9 ein Sender 10 und ein Empfänger 11 sowie eine Heizung 12, neben anderen hier nicht relevanten Teilen, befestigt. Desweiteren ist parallel zur Elektronikplatine 9 eine zweite Elektronikplatine 91 vorgesehen, die mittels einer flexiblen Verbindung 92 mit der ersten Elektronikplatine 9 verbunden ist. Diese zweite Elektronikplatine 91 trägt auch einen Anschlußstecker 93. Durch die flexible Verbindung 92 sind die Bauteile im inneren Gehäuseteil 3 mechanisch entkoppelt, sodaß sich Bewegungen am Anschlußstecker 93 nicht auf die inneren Bauteile auswirken können. Die Baugruppe aus den Elektronikplatinen 9 und 91 mit ihren opto-elektronischen Elementen wird entsprechend der Pfeile 94 in die entsprechenden Aufnahmeräume des inneren Gehäuseteils 3 von links eingeschoben. Dabei wird dann nur die innere Elektronikplatine 9 beispielsweise von Rasthaken 390 festgehalten. Die zweite Elektronikplatine 91 wird, wie bereits gesagt, nur über die flexible Verbindung 92 an der ersten Elektronikplatine 9 gehalten. Damit ist dann der innere Gehäuseteil 3 komplett mit seinen Elementen und Bauteilen bestückt.

Die Heizung 11 ist, wie in Fig. 1 dargestellt, flächenförmig in der Art einer Heizplatte ausgebildet. Desweiteren ist diese Heizplatte federnd gestaltet bzw. gelagert. Wenn die Heizung 11 in den zugehörigen Aufnahmeraum 111 des inneren Gehäuseteils 3 eingeschoben ist, dann wird sie zwischen einem ebenen Auflageteil 112 des innereren Gehäuseteils 3 und der Scheibe 5 federnd gegen die Scheibe 5 gedrückt. Der von der Heizung 11 abgedeckte Bereich entspricht der Meßstrecke des Sensors 1 und liegt zwischen den beiden Silikonkissen 7. Die Heizung 11 sorgt für die Enteisung der Meßstrecke und zum Verdunsten von eventuell gebiltetem Schwitzwasser im Inneren des Sensors 1.

Nachdem das innere Gehäuseteil 3, wie vorstehend beschrieben, bestückt worden ist, wobei diese Zusammenfügung in Fig. 1 durch die große Klammer 300 angedeutet ist, wird das innere Gehäuseteil 3 entsprechend dem Pfeil 301 in das äußere Gehäuseteil 2 von oben eingesetzt.

An jeder Stirnwand 21 des äußeren Gehäuseteils 2 ist innenliegend eine Tasche 22 mit einer Rastfeder 23 vorgesehen, die in Fig. 1 gestrichelt dargestellt ist. In diese Tasche 22 wird eine Feder 24, die in etwa L-förmig gestaltet ist, mit ihrem einen Schenkel 25 in Richtung des Pfeils 26 eingesetzt. In diesem Schenkel 25 ist eine Ausnehmung 27 angebracht. Wird die Feder 24 nun in Richtung des Pfeils 26 in die Tasche 22 eingeschoben, lenkt der Schenkel 25 dabei die Rastfeder 23 in der Tasche 22 aus, bis die Rastfeder 23 dann ganz in die Ausnehmung 27 eingreift und die Feder 24 arretiert. Der freie Schenkel 28 der Feder 24 weist am vorderen Ende eine etwas in Richtung auf das innere Gehäuseteil 3 vorspringenden Druck- oder Auflagefläche 29 auf. Mit dieser Druckfläche 29 liegt die Feder 24 auf einer Angriffsfläche 39 am oberen Ende des inneren Gehäuseteils 3 auf. Durch diese Federn 24, die am äußeren Gehäuseteil 2 festsitzend angreifen, wird das innere Gehäuseteil 3 und mit ihm die darin gehaltenen Teile in Richtung der Scheibe 5 gedrückt. Die Abmessungen der beteiligten Bauteile sind dabei so gewählt, daß die Silikonkissen 7 und die Heizung 12 immer unter Druck federnd auf der Scheibe 5 aufliegen, wenn der Sensor eingebaut ist, d. h. das Befestigungsmittel 6 mit der auf der Scheibe 5 aufgeklebten Befestigungsvorrichtung 4 in Eingriff ist.

Nach Einsetzen des inneren Gehäuseteils 3 in den äußeren Gehäuseteil 2 und dem Einsetzen der Federn 24 in die Taschen 22, wird, wie in Fig. 1 dargestellt, zuletzt ein Verschlußdeckel 201 auf den äußeren Gehäuseteil 2 aufgesetzt. Am Verschlußdeckel ist zum Befestigen ein Befestigungsteil 202 mit einer Rastöffnung 203 vorgesehen. Das Befestigungsteil 202 greift beim Einsetzen in Richtung des Pfeils 204 in das Innere des äußeren Gehäuseteils 2 ein und kommt mit seiner Rastöffnung 203 in Eingriff mit einer Rastnase 205, die an der Seitenwand 21 im Inneren des äußeren Gehäuseteils 2 angebracht ist und in Fig. 1 gestrichelt dargestellt ist.

Der Fuß des äußeren Gehäuseteils 3 ist mit einer umlaufenden Nut, die in der Zeichnung nicht dargestellt ist, versehen. In dieser Nut ist eine, wie in Fig. 1 dargestellt, umlaufende Dichtung 206 befestigt, die zur Abdichtung des Inneren des Sensors 1 nach außen hin dient, um damit Schmutz und Wasser vom Inneren fern zu halten. Die Dichtung 206 dient darüberhinaus der Anpassung an die Krümmung der Scheibe. So kann beispielsweise die Dicke der Dichtung 206 bei montiertem Sensor 1 in der Mitte 2 mm und an den Rändern jeweils 1,7 mm betragen. Damit ist ein toleranzunabhängiges Anliegen des Sensors 1 an der Scheibe 5 gewährleistet. Die Kraft dafür wird von den Schiebern 6 und den Haltefüßen 41 auf die Dichtung 206 übertragen.

In besonders vorteilhafter Weise ist erfindungsgemäß von diesem befestigenden Anliegen des Sensors 1 an der Scheibe 5 das Ankoppeln von Sender 10 und Empfänger 11 über die jeweiligen Silikonkissen 7 völlig unabhängig, da diese mit der zwischen innerem Gehäuseteil 3 und äußerem Gehäuseteil 2 herrschenden Federkraft, die von den Federn 24 aufgebracht wird, an die Scheibe 5 angedrückt werden. Auch dieses ankoppelnde Andrücken der Silikonkissen 7 ist demnach toleranzunabhängig.

Der Anschlußstecker 93 ist auf seiner dem äußeren Gehäuseteil 2 zugewandten Seite mit einer umlaufenden Nut 931 versehen, wie in Fig. 1 dargestellt. Die auf der Seite des Anschlußsteckers 93 liegende Außenwand 932 von äußerem Gehäusteil 2 und angrenzendem Teil des Verschlußdeckels 201 ist mit einer in der Zeichnung nicht dargestellten Ausnehmung versehen, die in ihren Abmessungen größer als die Nut 931 des Anschlußsteckers 93 ist. Damit ist sichergestellt, daß der Anschlußstecker 93 sich auch im komplettierten Sensor 1 bewegen kann, ohne daß der Sensor 1 selbst bewegt wird. Die Flexibilität von der als Träger für den Anschlußstecker 93 dienenden Elektronikplatine 91 ist damit auch nach außen übertragen und gewährleistet.

Die Erfindung beinhaltet eine einfache Befestigung des Sensors 1 sowie einen sehr vorteilhaften Aufbau desselben. Die Befestigungsfüße 41 konnen vom Scheibenhersteller positionsgenau an die Windschutzscheibe 5 geklebt werden. Beim Automobilhersteller wird dann der komplette Sensor 1 mittels der Schieber 6 daran befestigt. Durch den besonderen Aufbau besteht ein großer Vorteil darin, daß ein Ankleben optischer Bauteile an die Scheibe überflüssig ist. Durch die Aufteilung in ein äußeres 2 und ein inneres Gehäuseteil 3 ist die Kraft für die Ankopplung der als Fenster dienenden Silikonkissen 7 nur durch die Federkraft der Federn 24, die zwischen äußerem und innerem Gehäuseteil wirkt, gegeben. Somit erfolgt die optische Ankopplung an die und das Anliegen des Sensors 1 mit seiner Dichtung 206 an der Windschutzscheibe toleranzunabhängig voneinander.

## Patentansprüche

1. Sensor (1) zum optischen Erfassen von Fremdkörpern, insbesondere von Regentropfen, auf einer Scheibe (5), insbesondere auf der Windschutzscheibe eines Kraftfahrzeugs, enthaltend einen **Sender** (10) und einen Empfänger (11), die an die Innenseite der Scheibe angekoppelt, Fremdkörper, die auf der Außenseite der Scheibe im Bereich der Meßstrecke zwischen Sender und Empfänger sind, detektieren, wobei der Sensor (1) einen äußeren (2) und einen inneren (3) Gehäuseteil sowie eine Befestigungsvorrichtung (4), die auf die Scheibe (5) geklebt ist, enthält, wobei die wesentlichen Elemente des Sensors (1) vom inneren Gehäuseteil (3) gehalten sind und am äußeren Gehäuseteil (2) ein Befestigungsmittel (6) angebracht ist, das mit der Befestigungsvorrichtung (4) in Eingriff bringbar ist, um den Sensor (1) an der Scheibe (5) lösbar zu befestigen und wobei das innere Gehäuseteil (3) mittels Federkraft, die am äußeren Gehäuseteil (2) angreift, auf die Scheibe (5) gedrückt wird, dadurch gekennzeichnet, daß am äußeren Gehäuseteil (2) Taschen (22) mit Rastfedern **(23)** vorgesehen sind und daß in diese Taschen (22) jeweils eine Feder (24) einrastend einsetzbar sind, wobei diese Federn (24), mit Druckflächen (29) auf einer Fläche (39) des inneren Gehäuseteils (3) aufliegend, das innere Gehäuseteil (3) auf die Scheibe (5) hin vordrücken.

2. Sensor nach Anspruch 1, dadurch gekennzeichnet, daß die Befestigungsvorrichtung (4) aus vorzugsweise zwei auf die Scheibe (5) geklebten Haltefüßen (41) besteht.

3. Sensor nach Anspruch 2, dadurch gekennzeichnet, daß die Haltefüße (41) von der Scheibe (5) beabstandete, vorzugsweise zylinderförmige Haltezapfen (42) aufweisen.

4. Sensor nach einem der vorigen Ansprüche, dadurch gekennzeichnet, daß das Befestigungsmittel aus vorzugsweise zwei Schiebern (6) mit entsprechend gestalteten Rückhaltemitteln (61, 62), insbesondere in schiefer Ebene angeordneten Schlitze, besteht, die im äußeren Gehäuseteil (2) angebracht und verschiebbar geführt sind, und in entsprechend gestaltete Teile (42) der Befestigungsvorrichtung (4) arretierend einschiebbar sind.

5. Sensor nach einem der vorigen Ansprüche, dadurch gekennzeichnet, daß in das innere Gehäuseteil (3) zwei Silikonkissen (7) einsetzbar sind, die zwischen Sender (10) und Empfänger (11) die Ankopplung an die Scheibe (5) bewirken, und mittels der auf das innere Gehäuseteil (3) wirkenden Federkraft an die Scheibe (5) andrückbar sind.

6. Sensor nach einem der vorigen Ansprüche, dadurch gekennzeichnet, daß in das innere Gehäuseteil (3) zwei Prismenteile (8) einschiebbar sind, die jeweils zwischen Sender (10) und Empfänger (11) die Führung des Lichtstrahls vornehmen.

7. Sensor nach einem der vorigen Ansprüche, dadurch gekennzeichnet, daß in das innere Gehäuseteil (3) Sender (10) und Empfänger (11) einschiebbar sind.

8. Sensor nach einem der vorigen Ansprüche , dadurch gekennzeichnet, daß in das innere Gehäuseteil (3) eine Heizung (12) einsetzbar ist, die die Scheibe (5) im Bereich der Meßstrecke (111) zwischen Sendereinkopplung (71) und Empfängerauskopplung (72) beheizt.

9. Sensor nach einem der vorigen Ansprüche, dadurch gekennzeichnet, daß zumindest eine Elektronikplatine (9) am inneren Gehäuseteil (3) befestigbar (390) ist.

10. Sensor nach einem der Ansprüche 5 bis 9, dadurch gekennzeichnet, daß auf der Elektronikplatine (9) Sender (10), Empfänger (11) und Heizung (12) befestigt und somit gemeinsam in das innere Gehäuseteil (3) einsetzbar sind.

11. Sensor nach Anspruch 9 oder 10, dadurch gekennzeichnet, daß an der Elektronikplatine (9) eine zweite Elektronikplatine (91) mittels einer flexiblen Verbindung (92) parallel angebracht ist, auf der vorzugsweise auch ein Anschlußstecker (93) für den Sensor (1) angeordnet ist.

12. Sensor nach einem der vorigen Ansprüche, dadurch gekennzeichnet, daß am äußeren Gehäuseteil (2) eine umlaufende Dichtung (206) vorgesehen ist, die auf der Scheibe (5) aufliegt und das Innere des Sensors (1) nach außen hin abdichtet.

## Claims

1. Sensor (1) for optically detecting foreign bodies, in particular raindrops, on a pane (5), in particular on the windscreen of a motor vehicle, containing a transmitter (10) and a receiver (11) which are coupled to the inner side of the pane and detect foreign bodies which are present on the outer side of the pane in the region of the measuring path between the transmitter and receiver, the sensor (1) containing an outer housing part (2) and an inner housing part (3) as well as a fastening device (4) which is bonded onto the pane (5), the essential elements of the sensor (1) being held by the inner housing part (3) and there being attached on the outer housing part (2) a fastening means (6) which can engage with the fastening device (4) in order to fasten the sensor (1) detachably on the pane (5), and the inner housing part (3) being pressed onto the pane (5) by means of spring force acting on the outer housing part (2), characterized in that pockets (22) with latching springs (23) are provided on the outer housing part (2) and in that a spring (24) can be inserted in a latching fashion into these pockets (22) in each case, these springs (24), resting with pressure surfaces (29) on a surface (39) of the inner housing part (3), pressing the inner housing part (3) forwards onto the pane (5).

2. Sensor according to Claim 1, characterized in that the fastening device (4) comprises preferably two retaining feet (41) bonded onto the pane (5).

3. Sensor according to Claim 2, characterized in that the retaining feet (41) have preferably cylindrical retaining pins (42) spaced apart from the pane (5).

4. Sensor according to one of the preceding claims, characterized in that the fastening means comprise preferably two slides (6) with appropriately configured restraining means (61, 62), in particular slots arranged in an inclined plane, which are fitted in the outer housing part (2) and guided displaceably, and can be pushed in a locking fashion into correspondingly configured parts (42) of the fastening device (4).

5. Sensor according to one of the preceding claims, characterized in that it is possible to insert into the inner housing part (3) two silicone cushions (7) which effect the coupling onto the pane (5) between the transmitter (10) and receiver (11), and can be pressed against the pane (5) by means of the spring force acting on the inner housing part (3).

6. Sensor according to one of the preceding claims, characterized in that it is possible to push into the inner housing part (3) two prism parts (8) which guide the light beam between the transmitter (10) and receiver (11) in each case.

7. Sensor according to one of the preceding claims, characterized in that the transmitter (10) and receiver (11) can be pushed into the inner housing part (3).

8. Sensor according to one of the preceding claims, characterized in that it is possible to insert into the inner housing part (3) a heater (12) which heats the pane (5) in the region of the measuring path (111) between the transmitter input (71) and receiver output (72).

9. Sensor according to one of the preceding claims, characterized in that at least one electronic printed circuit board (9) can be fastened (390) on the inner housing part (3).

10. Sensor according to one of Claims 5 to 9, characterized in that the transmitter (10), receiver (11) and heater (12) are fastened on the electronic printed circuit board (9) and can therefore be inserted jointly into the inner housing part (3).

11. Sensor according to Claim 9 or 10, characterized in that by means of a flexible connection (92) there is attached in parallel on the electronic printed circuit board (9) a second electronic printed circuit board (91) on which a connector (93) for the sensor (1) is also preferably arranged.

12. Sensor according to one of the preceding claims, characterized in that provided on the outer housing part (2) is a circumferential seal (206) which bears against the pane (5) and seals the interior of the sensor (1) against the outside.

## Revendications

1. Capteur (1) pour la détection optique de corps étrangers notamment de gouttes de pluie sur une vitre (5) en particulier le pare-brise d'un véhicule automobile comprenant :
• un émetteur (10) et un récepteur (11) couplés sur le côté intérieur de la vitre, pour détecter des corps étrangers qui se trouvent sur le côté extérieur de la vitre au niveau du chemin de mesure entre l'émetteur et le récepteur,
• le capteur (1) ayant une partie extérieure (2) et une partie intérieure (3) de boîtier ainsi qu'un dispositif de fixation (4) collé à la vitre (5),
• les éléments principaux du capteur (1) étant logés dans la partie intérieure (3) du boîtier et un moyen de fixation (6) est prévu sur la partie extérieure (2), qui vient en prise avec le dispositif de fixation (4) pour fixer de manière amovible le capteur (1) à la vitre (5), et
• la partie intérieure (3) du boîtier est pressée contre la vitre (5) par une force de ressort agissant sur la partie extérieure (2) du boîtier,
caractérisé en ce que
• la partie extérieure (2) du boîtier comporte des poches (22) avec des ressorts d'encliquetage (23) et,
• ces poches (22) reçoivent chaque fois de manière encliquetée un ressort (24),
• les ressorts (24) s'appuyant avec les surfaces de pression (29) sur une surface (39) de la partie intérieure de boîtier (3) pour précontraindre la partie intérieure de boitier (3) contre la vitre (5).

2. Capteur selon la revendication 1,
caractérisé en ce que
le dispositif de fixation (4) se compose de préférence de deux pattes de fixation (41) collées à la vitre (5).

3. Capteur selon la revendication 2,
caractérisé en ce que
les pattes de fixation (41) comportent des goujons de fixation (42) de préférence cylindriques distants de la vitre (5).

4. Capteur selon l'une quelconque des revendications 1 à 3,
caractérisé en ce que
le moyen de fixation se compose de préférence de deux coulisseaux (6) avec des moyens de retenue (61, 62) de forme correspondante notamment des fentes placées dans un plan incliné et qui sont prévues dans la partie extérieure de boîtier (2) et sont guidées de manière coulissante et peuvent être glissées dans des pièces de forme correspondantes (42) du dispositif de fixation (4) pour être bloquées.

5. Capteur selon l'une quelconque des revendications précédentes,
caractérisé en ce que
deux coussins de silicone (7) se placent dans la partie intérieure (3) du boîtier, ces coussins assurant le couplage à la vitre (5) entre l'émetteur (10) et le récepteur (11) et ils sont pressés contre la vitre (5) par la force de ressort agissant sur la partie intérieure (3) du boîtier.

6. Capteur selon l'une quelconque des revendications précédentes,
caractérisé en ce que
deux pièces prismatiques (8) se glissent dans la partie intérieure de boîtier (3), ces pièces assurant chaque fois le guidage du faisceau lumineux entre l'émetteur (10) et le récepteur (11).

7. Capteur selon l'une quelconque des revendications précédentes,
caractérisé en ce que
l'émetteur (10) et le récepteur (11) se glissent dans la partie intérieure de boîtier (3).

8. Capteur selon l'une quelconque des revendications précédentes
caractérisé en ce qu'
un chauffage (12) logé dans la partie intérieure de boîtier (3) assure le chauffage de la vitre (5) dans la zone du chemin de mesure (111) comprise entre le couplage d'entrée (71) de l'émetteur et le couplage de sortie (72) du récepteur.

9. Capteur selon l'une quelconque des revendications précédentes,
caractérisé en ce qu'
au moins une platine électronique (9) est fixée (390) contre la partie intérieure (3) du boîtier.

10. Capteur selon l'une quelconque des revendications 5 à 9,
caractérisé en ce que
l'émetteur (10), le récepteur (11) et le moyen de chauffage (12) sont fixés sur la platine électronique (9) et se logent ainsi en commun dans la partie intérieure de boîtier (3).

11. Capteur selon l'une quelconque des revendications 9 ou 10,
caractérisé par
une seconde platine électronique (91) montée sur la platine électronique (9), en parallèle, à l'aide d'une liaison souple (92), cette platine comportant de préférence un connecteur (93) pour le capteur (1).

12. Capteur selon l'une quelconque des revendications précédentes,
caractérisé en ce que
la partie extérieure (2) du boîtier comporte un joint périphérique (206) qui s'appuie contre la vitre (5) et assure l'étanchéité de l'intérieur du capteur (1) vis-à-vis de l'extérieur.
